Europäisches Patentamt

European Patent Office

Office européen des brevets

(19)

(11) Veröffentlichungsnummer: **0 183 736**
**B1**

(12) **EUROPÄISCHE PATENTSCHRIFT**

(45) Veröffentlichungstag der Patentschrift: **18.07.90**

(21) Anmeldenummer: **85902462.2**

(22) Anmeldetag: **15.05.85**

(86) Internationale Anmeldenummer:
**PCT/DE85/00169**

(87) Internationale Veröffentlichungsnummer:
**WO 85/05252 05.12.85 Gazette 85/26**

(51) Int. Cl.⁵: **A 23 L 1/237, A 23 L 1/229**

(54) NATRIUMARMES, ALS KOCHSALZSUBSTITUT GEEIGNETES SALZGEMISCH.

(30) Priorität: **18.05.84 DE 3418644**

(43) Veröffentlichungstag der Anmeldung:
**11.06.86 Patentblatt 86/24**

(45) Bekanntmachung des Hinweises auf die Patenterteilung:
**18.07.90 Patentblatt 90/29**

(84) Benannte Vertragsstaaten:
**AT BE CH DE FR GB IT LI LU NL SE**

(56) Entgegenhaltungen:
**GB-A-2 058 541**
**US-A-2 011 321**
**US-A-3 524 747**
**US-A-3 775 543**
**US-A-4 243 691**

Die Akte enthält technische Angaben, die nach dem Eingang der Anmeldung eingereicht wurden und die nicht in dieser Patentschrift enthalten sind.

(73) Patentinhaber: **DIAMALT AKTIENGESELLSCHAFT**
**Georg-Reismüller-Strasse 34**
**D-8000 München 50 (DE)**

(72) Erfinder: **BELOHLAWEK, Lothar**
**Gartenstrasse 79**
**D-8050 Freising (DE)**
Erfinder: **WEBER, Wolfgang**
**Destoucherstrasse 73**
**D-8000 München 40 (DE)**
Erfinder: **SCHULZE, Paul-Eberhard**
**Endestrasse 30**
**D-1000 Berlin 39 (DE)**

EP 0 183 736 B1

# EP 0 183 736 B1

## Beschreibung

Die Erfindung betrifft ein natriumarmes, als Kochsalzsubstitut geeignetes Salzegemisch.

Kochsalz, das ist Natriumchlorid, ist das beliebteste und am meisten verwendete Würzesalz und tatsächlich ist die Aufnahme einer bestimmten Menge Kochsalz für den Menschen lebensnotwendig. Der notwendige Bedarf an Kochsalz wird jedoch mit der heutigen Nahrung weit übergedeckt und aus medizinischen Gründen ist die Herabsetzung der Aufnahme von Natrium dringend geboten. Bei bestimmten Krankheitserscheinungen besteht sogar die Forderung nach natriumarmen Lebensmitteln. Da jedoch fast alle Lebensmittel zur Entwicklung ihrer Geschmacksnoten einen gewissen Gehalt an Kochsalz oder gleichwertigen Würzsalzen benötigen, besteht seit langem der Bedarf nach einem Kochsalzsubstitut, welches alle guten Eigenschaften des Kochsalzes besitzt, dennoch aber natriumarm ist.

Es gibt eine große Anzahl von Vorschlägen zum vollständigen oder teilweisen Ersatz des Kochsalzes.

In der DE—PS—1 692 729 wird die Verwendung einer Salzmischung bestehend aus 20—80 Gew.-% Kaliumchlorid und 80—20 Gew.-% Natriumchlorid als Würzsalz empfohlen.

Aus der US—PS—2 742 366 ist ein Kochsalzersatzmittel bekannt, das einen KCl-Gehalt von 50—70% aufweist.

Aus der DE—OS—25 27 003 ist ein Diätsalz bekannt, bei dem mindestens für die Hälfte des Äquivalentgewichtes an Kationen Kalium eingesetzt ist, und das ein Süßungsmittel wie Saccharinat, Cyclamat, Saccharose oder dgl. enthält. Der Zusatz der Süßungsmittel soll den Bittergeschmack von Kaliumchlorid überdecken.

Die DE—A—30 35 580 und GB—A—20 58 541 offenbaren ein Kochsalzsubstitut enthaltend Kaliumchlorid und einen Anteil an autolysierter Hefe, der ebenfalls bestimmt ist, die durch Kaliumchlorid verursachte Bitterkeit zu vermindern.

Die EP—A—41 620 beschreibt ein streng natriumarmes Diätsalz bestehend aus einer Mischung von 60—80 Gew.-% Kaliumchlorid, 10—30 Gew.-% Kaliumadipat, 2—5 Gew.-% Kaliumtartrat, 0,5—2 Gew.-% Kaliumglutamat, 0,5—2 Gew.-% Adipinsäure und Kaliuminosinat und/oder Kaliumguanylat. Das Produkt kann weiterhin ein Aromatisierungsmittel enthalten.

Aus der EP—A—59 363 ist ein zum menschlichen Verzehr bestimmtes Salzgemisch bekannt, enthaltend 0—50 Gew.-% Natriumchlorid, 22,5—85 Gew.-% Kaliumchlorid, 0—35 Gew.-% Kaliumsulfat, 1—8 Gew.-% Glutamat, 0,1—1 Gew.-% Nucleotide und 4—30 Gew.-% Zucker oder Zuckeraustauschstoffe.

Aus der DE—OS—29 06 697 ist ein Kochsalzsubstitut bekannt, welches neben Natriumchlorid 5—50 Gew.-% Kalium und 5—50 Gew.-% Magnesium enthält.

Aus der EP—A—90 571 ist eine gekörnte Salzmischung bekannt aus 30—70 Gew.-% Natriumchlorid und 70—30 Gew.-% Kaliumchlorid.

Die DE—PS—1 051 103 offenbart ein alkali-, erdalkali- und halogenfreies Kochsalzersatzmittel hergestellt durch Einleiten von Ammoniak in eine wässrige Suspension einer Dicarbonsäure, deren Carbonsäuregruppen durch mindestens eine Methylengruppe voneinander getrennt sind. Geeignete Dicarbonsäuren zur Verwendung hierbei sind Adipinsäure, Glutarsäure und Bernsteinsäure.

In der US—A—3,775,543 und US—A—3,524,747 werden natriumarme Salzgemische zum Würzen von Fleisch offenbart.

Aus der US—A—4,243,691 ist ein natriumsalzfreies Würzsalz bekannt, welches neben Kaliumchlorid und Kaliumphosphat 5'-Nucleolide, Aminosäuregemische und Zucker enthält.

In der DE—PS—26 57 913 wird die Verwendung von Salzen des Glycinamids als Kochsalzaustauschstoff empfohlen.

Die vorstehende Aufstellung zeigt, wie zahlreich die Versuche sind, ein geeignetes Kochsalzsubstitut zu finden. Die zahlreichen Bemühungen zeigen aber auch, daß es keines der bekannten Kochsalzsubstitute voll befriedigend ist.

Die meisten der bekannten Kochsalzsubstitute haben den Nachteil eines sehr hohen Kaliumchloridgehaltes. Viele bekannten Kochsalzsubstitute haben weiterhin den Nachteil, daß sie nicht backfest sind und daher nicht zur Herstellung von Backwaren oder anderen Waren, bei deren Hestellung eine Erhitzung stattfindet, verwendet werden können.

Die vorliegende Erfindung schafft nun ein neues Salzgemisch, welches sich durch einen hervorragenden, ausgeprägten, kochsalzähnlichen Geschmack auszeichnet, welches darüber hinaus backfest ist und sich daher insbesonders zur Vewendung für die Herstellung von Backwaren eignet. Es kann jedoch auch zur Herstellung anderer Lebensmittel, beispielsweise zur Herstellung von Käse- und Wurstzubereitungen eingesetzt werden, aber auch als Tischsalz.

Die wesentlichen Bestandteile des erfindungsgemäßen Salzgemisches sind Kaliumchlorid (KCl) und Kaliumdihydrogenphosphat ($KH_2PO_4$) dazu gegebenenfalls Glutamat sowie Hefeextrakt und eventuelle eine untergeordnete Menge Natriumchlorid sowie eine pflanzliche Würzmischung zur Aromatisierung.

Das erfindungsgemässe natriumarme, als Kochsulzsubstitut geeignete Salzgemisch hat danach die folgende Zusammensetzung:

35—50 Gew.-% Kaliumchlorid (KCl)

18—25 Gew.-% Kaliumdihydrogenphosphat ($KH_2PO_4$)

4—10 Gew.-% Glutamat

1—5 Gew.-% Hefeautolysat

2

EP 0 183 736 B1

0—20 Gew.-% Natriumchlorid (NaCl)
0,2—10 Gew.-% einer pflanzlichen Würzmischung.

Als Glutamat eignen sich die Calcium-, Magnesium- und Kaliumsalze der Glutaminsäure, die vorzugsweise in Kombination in einem Gewichtsverhältnis von 5:2:1 eingesetzt werden.

Das erfindungsgemäße Salzgemisch kann zusätzlich 0,1—8 Gew.-% Citronensäure und/oder 0,1—3 Gew.-% Dikaliumtartrat zur Geschmackskorrektur enthalten.

Weiterhin kann das Salzgemisch eine geringe Menge Tricalciumphosphat enthalten, welches einem Zusammenbacken der Mischung entgegenwirkt. Weitere Zusätze wie Adipinsäure oder Riboflavin sind möglich.

Zur Erzielung bestimmter Geschmacksrichtungen kann man der Salzmischung zusätzlich Würzmischungen zusetzen, die vorteilhafterweise mindestens 3 der folgenden Bestandteile: Sellerie, Zwiebel, Pfeffer, Koriander, Curcuma, Liebstöckel und Kümmel enthalten.

Das erfindungsgemäße Salzgemisch ist durch einfaches Mischen der Komponenten herstellbar.

Ein erfindungsgemäßes Salzgemisch besteht beispielsweise aus:
36—48 Gew.-% Kaliumchlorid (KCl)
18—24 Gew.-% Kaliumdihydrogenphosphat ($KH_2PO_4$)
5—8 Gew.-% Glutamat
2—4 Gew.-% Hefeautolysat
5—20 Gew.-% Natriumchlorid (NaCl)
0—8 Gew.-% Citronensäure
0—3 Gew.-% Dikaliumtartrat
0—1 Gew.-% Adipinsäure
0—0,1 Gew.-% Riboflavin
0—0,8 Gew.-% Tricalciumphosphat
0,1—0,5 Gew.-% Sellerie (vermahlen)
0—0,8 Gew.-% Zwiebel (vermahlen)
0—2,0 Gew.-% Pfeffer (vermahlen)
0—0,8 Gew.-% Koriander (vermahlen)
0,5—2,5 Gew.-% Curcuma (vermahlen)
0,1—2,0 Gew.-% Liebstöckel (vermahlen)
0—2,5 Gew.-% Kümmel (vermahlen).

Ein besonders bevorzugtes Salzgemisch besteht aus:
38,6—46,0 Gew.-% Kaliumchlorid (KCl)
20,5—22,0 Gew.-% Kaliumdihydrogenphosphat ($KH_2PO_4$)
6,75—7,0 Gew.-% Calcium-, Magnesium- und Kaliumglutamat (5:2:1)
2,8—2,9 Gew.-% Hefeautolysat
10,0—17,8 Gew.-% Natriumchlorid (NaCl)
0—6,0 Gew.-% Citronensäure
1,8—2,2 Gew.-% Dikaliumtartrat
0,4—0,6 Gew.-% Adipinsäure
0—0,05 Gew.-% Riboflavin
0,4—0,6 Gew.-% Tricalciumphosphat
0,2—0,35 Gew.-% Sellerie (vermahlen)
0,14—0,6 Gew.-% Zwiebel (vermahlen)
0,1—0,14 Gew.-% Pfeffer (vermahlen)
0,13—0,6 Gew.-% Koriander (vermahlen)
1,0—1,4 Gew.-% Curcuma (vermahlen)
0,7—1,1 Gew.-% Liebstöckel (vermahlen)
0,1—1,63 Gew.-% Kümmel (vermahlen).

**Patentansprüche**

1. Natriumarmes als Kochsalzsubstitut geeignetes Salzgemisch, enthaltend
35—50 Gewichtsprozent Kaliumchlorid
18—25 Gewichtsprozent Kaliumdihydrogenphosphat
4—10 Gewichtsprozent Glutatmat
1—5 Gewichtsprozent Hefeautolysat
0—20 Gewichtsprozent Natriumchlorid
0,2—10 Gewichtsprozent einer pflanzlichen Würzmischung.

2. Salzgemisch nach Anspruch 1, dadurch gekennzeichnet, daß es zusätzlich 0,1—8 Gewichtsprozent Zitronensäure und/oder 0,1—3 Gewichtsprozent Dikaliumtartrat enthält.

3. Salzgemisch nach Anspruch 1 oder 2, dadurch gekennzeichnet, daß die pflanzliche Würzmischung aus mindestens drei der folgenden Bestandteile besteht:
Sellerie (vermahlen)
Zwiebel (vermahlen)

3

Pfeffer (vermahlen)
Koriander (vermahlen)
Curcuma (vermahlen)
Liebstöckel (vermahlen)
Kümmel (vermahlen).

4. Salzgemisch nach Anspruch 1 bis 3 gekennzeichnet durch 1—10 Gewichtsprozent einer pflanzlichen Würzmischung.

5. Salzgemisch nach einem der vorgehenden Ansprüche, bestehend aus:

36—48 Gewichtsprozent Kaliumchlorid
18—24 Gewichtsprozent Kaliumdihydrogenphosphat
5—8 Gewichtsprozent Glutamat
2—4 Gewichtsprozent Hefeautolysat
5—20 Gewichtsprozent Natriumchlorid
0—8 Gewichtsprozent Zitronensäure
0—3 Gewichtsprozent Dikaliumtartrat
0—1 Gewichtsprozent Adipinsäure
0—0,1 Gewichtsprozent Riboflavin
0—0,8 Gewichtsprozent Tricalciumphosphat
0,1—0,5 Gewichtsprozent Sellerie (vermahlen)
0—0,8 Gewichtsprozent Zwiebel (vermahlen)
0—2,0 Gewichtsprozent Pfeffer (vermahlen)
0—0,8 Gewichtsprozent Koriander (vermahlen)
0,5—2,5 Gewichtsprozent Curcuma (vermahlen)
0,1—2,0 Gewichtsprozent Liebstöckel (vermahlen)
0—2,5 Gewichtsprozent Kümmel (vermahlen).

6. Salzgemisch nach einem der vorgehenden Ansprüche, bestehend aus:

38,0—46,0 Gewichtsprozent Kaliumchlorid
20,5—22,0 Gewichtsprozent Kaliumdihydrogenphosphat
6,75—7,0 Gewichtsprozent Calcium-, Magnesium- und Kaliumglutamat (5:2:1)
2,8—2,9 Gewichtsprozent Hefeautolysat
10,0—17,8 Gewichtsprozent Natriumchlorid
0—6,0 Gewichtsprozent Zitronensäure
1,8—2,2 Gewichtsprozent Dikaliumtartrat
0,4—0,6 Gewichtsprozent Adipinsäure
0—0,05 Gewichtsprozent Riboflavin
0,4—0,6 Gewichtsprozent Tricalciumphosphat
0,2—0,35 Gewichtsprozent Sellerie (vermahlen)
0,14—0,6 Gewichtsprozent Zwiebel (vermahlen)
0,1—0,14 Gewichtsprozent Pfeffer (vermahlen)
0,13—0,6 Gewichtsprozent Koriander (vermahlen)
1,0—1,4 Gewichtsprozent Curcuma (vermahlen)
0,7—1,1 Gewichtsprozent Liebstöckel (vermahlen)
0,1—1,63 Gewichtsprozent Kümmel (vermahlen).

7. Verwendung eines Salzgemisches nach einem der Ansprüche 1 bis 6 für die Herstellung von Backwaren.

8. Verwendung eines Salzgemisches nach einem der Ansprüche 1 bis 6 für die Herstellung von Käse- und Wurstzubereitungen.

## Revendications

1. Mélange de sels pauvre en sodium qui convient comme produit de remplacement du sel de cuisine, mélange qui contient:

de 35 à 50% en poids de chlorure de potassium,
de 18 à 25% en poids de dihydrogéno-phosphate de potassium,
de 4 à 10% en poids d'un glutamate,
de 1 à 5% en poids d'un autolysat de levure,
de 0 à 20% en poids de chlorure de sodium et
de 0,2 à 10% en poids d'un mélange d'assaisonnements végétaux.

2. Mélange de sels selon la revendication 1, mélange caractérisé en ce qu'il contient en outre de 0,1 à 8% en poids d'acide citrique et/ou de 0,1 à 3% en poids de tartrate de di-potassium.

3. Mélange de sels selon l'une des revendications 1 et 2, mélange caractérisé en ce que le mélange de condiments végétaux contient au moins trois des constituants suivants:

Céleri (broyé)
Oignon (broyé)
Poivre (broyé)
Coriandre (broyé)
Curcuma (broyé)
Livèche (broyé)
Cumin (broyé).

4. Mélange de sels selon l'une quelconque des revendications 1 à 3, mélange caractérisé en ce qu'il contient de 1 à 10% en poids d'un mélange de condiments végétaux.

5. Mélange de sels selon l'une quelconque des revendications précédentes, mélange qui est constitué:

de 36 à 48% en poids de chlorure de potassium,
de 18 à 24% en poids de dihydrogéno-phosphate de potassium,
de 5 à 8% en poids d'un glutamate,
de 2 à 4% en poids d'un autolysat de levure,
de 5 à 20% en poids de chlorure de sodium,
de 0 à 8% en poids d'acide citrique,
de 0 à 3% en poids de tartrate de di-potassium,
de 0 à 1% en poids d'acide adipique,
de 0 à 0,1% en poids de riboflavine,
de 0 à 0,8% en poids de phosphate tricalcique,
de 0,1 à 0,5% en poids de céleri (broye)
de 0 à 0,8% en poids d'oignon (broyé)
de 0 à 0,2% en poids de poivre (broyé)
de 0 à 0,8% en poids de coriandre (broyé)
de 0,5 à 2,5% en poids de cucuma (broyé)
de 0,1 à 2,0% en poids de livèche (broyée)
de 0 à 2,5% en poids de cumin (broyé).

6. Mélange de sels selon l'une quelconque des revendications précédentes, mélange qui est constitué:

de 38,0 à 46,0% en poids de chlorure de potassium,
de 20,5 à 22,0% en poids de dihydrogéno-phosphate de potassium
de 6,75 à 7,0% en poids de glutamates de calcium, de magnésium et de potassium, (5:2:1),
de 2,8 à 2,9% en poids d'un autolysat de levure,
de 10,0 à 17,8% en poids de chlorure de sodium,
de 0 à 6,0% en poids d'acide citrique,
de 1,8 à 2,2% en poids de tartrate de di-potassium,
de 0,4 à 0,6% en poids d'acide adipique,
de 0 à 0,05% en poids de riboflavine,
de 0,4 à 0,6% en poids de phosphate tricalcique,
de 0,2 à 0,35% en poids de céleri (broyé),
de 0,14 à 0,6% en poids d'oignon (broyé),
de 0,1 à 0,14% en poids de poivre (broyé),
de 0,13 à 0,6% en poids de coriandre (broye),
de 1,0 à 1,4% en poids de curcuma (broyé),
de 0,7 à 1,1% en poids de livèche (broyée),
de 0,1 à 1,63% en poids de cumin (broyé).

7. Application d'un mélange de sels selon l'une quelconque des revendications 1 à 6 pour la fabrication de pâtisseries.

8. Application d'un mélange de sels selon l'une quelconque des revendications 1 à 6 pour la fabrication de compositions pour fromages et saucisses.

**Claims**

1. Salt mixture having a low sodium content, suitable as a substitute for cooking salt, containing
35—50% by weight potassium chloride
18—25% by weight potassium dihydrogen phosphate
4—10% by weight glutamate
1—5% by weight yeast autolysate
0—20% by weight sodium chloride
0.2—10% by weight of a vegetable seasoning mixture.

2. Salt mixture according to claim 1, characterised in that it contains, in addition, 0.1—8% by weight citric acid and or 0.1—3% by weight dipotassium tartrate.

3. Salt mixture according to claim 1 or 2, characterised in that the vegetable seasoning mixture consists of at least three of the following constituents:

celery (ground)
onion (ground)
pepper (ground)
coriander (ground)
turmeric (ground)
lovage (ground)
caraway (ground).

4. Salt mixture according to claims 1 to 3, characterised by 1—10% by weight of a vegetable seasoning mixture.

5. Salt mixture according to one of the preceding claims, consisting of:

36—48% by weight potassium chloride
18—24% by weight potassium dihydrogen phosphate
5—8% by weight glutamate
2—4% by weight yeast autolysate
5—20% by weight sodium chloride
0—8% by weight citric acid
0—3% by weight dipotassium tartrate
0—1% by weight adipic acid
0—0.1% by weight riboflavin
0—0.8% by weight tricalcium phosphate
0.1—0.5% by weight celery (ground)
0—0.8% by weight onion (ground)
0—0.2% by weight pepper (ground)
0—0.8% by weight coriander (ground)
0.5—2.5% by weight turmeric (ground)
0.1—2.0% by weight lovage (ground)
0—2.5% by weight caraway (ground).

6. Salt mixture according to one of the preceding claims, consisting of:

38.0—46.0% by weight potassium chloride
20.5—22.0% by weight potassium dihydrogen phosphate
6.75—7.0% by weight calcium glutamate, magnesium glutamate and potassium glutamate (5:2:1)
2.8—2.9% by weight yeast autolysate
10.0—17.8% by weight sodium chloride
0—6.0% by weight citric acid
1.8—2.2% by weight dipotassium tartrate
0.4—0.6% by weight adipic acid
0—0.05% by weight riboflavin
0.4—0.6% by weight tricalcium phosphate
0.2—0.35% by weight celery (ground)
0.14—0.6% by weight onion (ground)
0.1—0.14% by weight pepper (ground)
0.13—0.6% by weight coriander (ground).
1.0—1.4% by weight turmeric (ground)
0.7—1.1% by weight lovage (ground)
0.1—1.63% by weight caraway (ground).

7. Use of a salt mixture according to one of claims 1 to 6 for the preparation of bakery products.

8. Use of a salt mixture according to one of claims 1 to 6 for the preparation of cheese and sausage preparations.